# EUROPEAN PATENT APPLICATION

(11) **EP 4 495 070 A1**
(43) Date of publication of application: **22.01.2025**
(21) Application number: 24188544.1
(22) Date of filing: 15.07.2024
(51) Int. Cl.: C01D 1/32, C25B 1/04

(54) **PURIFICATION OF CONCENTRATED AQUEOUS HYDROXIDE SOLUTIONS FOR ELECTROLYSIS**

(30) Priority: 21.07.2023 US 202363528115 P; 11.01.2024 US 202418409971
(71) Applicant: Air Products and Chemicals, Inc., Allentown, PA 18106 (US)
(72) Inventor: CASTEEL JR, William J, Pennsylvania, 18015 (US); OVERA, Sean Michael, Pennsylvania, 19446 (US); HEE KO, Byung, Pennsylvania, 18103 (US)
(74) Representative: Beck Greener LLP

(57) **Abstract**

Disclosed are novel processes, based on precipitation, settling, and filtration for the removal of critical impurities selected from dissolved transition metals, inorganic anions and dissolved organic compounds, from highly concentrated hydroxide solutions used as electrolytes in alkaline water electrolysis (AEW) to produce hydrogen. The processes comprise adding to the solutions at least one precipitation additive selected from water-soluble salts of alkaline earth metals; nickel (II) hydroxide; and hydroxides or oxides of alkaline earth metals, provided that the surface area of the hydroxides/oxides is more than 5 m²/g, to form at least one inorganic compound (or complex) as a precipitate which is removed from the solution.

## Description

The technical field of the present invention is alkaline electrolysis for the production of hydrogen gas (H₂). The invention relates specifically to purification of the concentrated aqueous hydroxide solutions used as the conducting electrolyte in such electrolytic processes.

Alkaline electrolyzers producing hydrogen rely on concentrated aqueous hydroxide solutions as the conducting electrolyte. Maximum electrolyzer cell performance depends on maintaining high conductivity in the electrolyte, through the separator and at the electrode electrolyte interfaces of the cell. Trace impurities including transition metal and organic impurities can lead to resistance increases at the electrode interfaces and within the electrolyte.

In contrast to proton exchange membrane water electrolysis (PEMWE), alkaline water electrolysis (AWE) producing hydrogen relies on concentrated hydroxide solutions as the conducting electrolyte. Optimal hydroxide ion conductivities may be achieved with aqueous potassium hydroxide (KOH) solution at ~30 wt.% in concentration. Common impurities in KOH and water increase electrolyzer cell resistance in a number of ways.

For example, reducible transition metal impurities can plate out on electrode and electrocatalyst surfaces changing and in many cases increasing cell overpotential. Indeed, long-term, stable operation of electrolyzer cells dictates that iron (II) cations (Fe²⁺) and iron (III) cations (Fe³⁺) should be kept at very low levels.

In addition to the effects of redox active transition metals, cations of the alkaline earth metals, calcium (Ca²⁺) and magnesium (Mg²⁺) are mentioned as having the potential to precipitate inert hydroxide on the positive electrode surface at high pH.

The impact of soluble anionic impurities is less well understood, but in general is not positive.

Carbonate (CO₃²⁻) arises readily from any air exposure from loss of inerting of the electrolyzer. As a large anion compared to hydroxide (OH⁻), negative effects on electrolyte conductivity may be expected as carbonate accumulates. The impact on conductivity is likely more significant in systems involving anion exchange membranes for water electrolysis (AEMWE). In such systems, percent level concentration of carbonate in the electrolyte can increase carbonate concentration in the membrane to 10 to 20% of the total membrane anion. As a result, membrane conductivity can decrease by as much as 30%. Clearly, maintaining carbonate at lower levels is important for AEMWE systems.

Targets for specific impurities in commercial AWE systems are shown in Table 1.

**TABLE 1**

| **Component** | **Concentration (ppm, w/w)** |
|---|---|
| Iron | 0.20 |
| Chromium | 5 |
| Calcium/Magnesium | 10 |
| Chloride | 100 |
| Carbonate | 10,000 |
| Silica | 20 |
| Sulfate | 1,000 |

This list confirms the need to maintain relatively low levels of soluble anions, and it highlights the particular sensitivity of the AWE electrodes systems to transition metals, particularly iron.

In order to minimize the effects of impurities on electrolyzer cell resistance, the electrolyte is typically prepared from high purity potassium hydroxide and ultra-high purity (UHP) water. UHP water is then used as the raw material for electrolysis throughout the operating life of the cells. Nevertheless, because some of these impurity targets are so low, the raw material potassium hydroxide often contains unacceptable levels of impurities rendering the electrolyte off published specs for certain impurities at the beginning of life (BOL). Furthermore, trace impurities in ultra-high-purity electrolysis water are slowly concentrated in the electrolyzer electrolyte, such that cell resistance can ultimately reach unacceptable levels, necessitating electrode refurbishment and electrolyte replacement.

Table 2 shows impurity levels in three grades of UHP water, and the potential for accumulation of those impurities as reagent water is fed to the electrolyzer. The table shows the potential for impurity accumulation after 3000 feed water volumes, each volume equivalent to the original electrolyte volume in the electrolyzer.

**TABLE 2**

| **Standard** | **Electronics and semiconductor industry water (ppb)** | | | **Impurity buildup after 3000 Electrolyzer Feed Water Volumes (ppm)** | | |
|---|---|---|---|---|---|---|
| Type | E-1 | E-2 | E-3 | E-1 | E-2 | E-3 |
| Resistivity (25°C) | 18.1 | 16.5 | 12 | - | - | - |
| Silica - Total | 5 | 10 | 50 | 15 | 30 | 150 |
| Chloride | 0.1 | 1 | 10 | 0.3 | 3 | 30 |
| Fluoride | 0.1 | 1 | 5 | 0.3 | 3 | 15 |
| Sulfate | 0.1 | 1 | 5 | 0.3 | 3 | 15 |
| Aluminum | 0.05 | 1 | 5 | 0.15 | | 12 |
| Antimony | 0.05 | 1 | 5 | 0.1 | 2 | 12 |
| Arsenic | 0.05 | 1 | 5 | 0.1 | 2 | 12 |
| Barium | 0.05 | 1 | 5 | 0.15 | 2 | 12 |
| Boron | 0.3 | 1 | 5 | 0.9 | 2 | 12 |
| Cadmium | 0.05 | 1 | 5 | 0.15 | 2 | 12 |
| Calcium | 0.05 | 1 | 5 | 0.15 | 2 | 12 |
| Chromium | 0.05 | 1 | 5 | 0.15 | 2 | 12 |
| Copper | 0.05 | 1 | 2 | 0.15 | 2 | 5 |
| Iron | 0.05 | 1 | 5 | 0.15 | 2 | 12 |
| Lead | 0.05 | 1 | 5 | 0.15 | 2 | 12 |
| Lithium | 0.05 | 1 | 5 | 0.15 | 2 | 12 |
| Magnesium | 0.05 | 1 | 5 | 0.15 | 2 | 12 |
| Manganese | 0.05 | 1 | 5 | 0.15 | 2 | 12 |
| Zinc | 0.05 | 1 | 5 | 0.15 | 3 | 15 |

| | | | | | | |
|---|---|---|---|---|---|---|
| Resistivity units are "MΩ.cm" or mega-Ohms (MΩ) multiplied by centimeters (cm) | | | | | | |

Organic impurities can accumulate in alkaline electrolyte both from contact with polymer-based piping and materials in the electrolyzer and UHP water systems. These materials are commonly used because of their corrosion resistance. They include catalyst and unreacted monomer components leached from the polymers, such as phthalate esters and their alkali phthalate hydrolysis products coming from any PVC lines in the water purification system, phenolic components as stabilizers in polypropylene, as well as trace humic acid type organic material from carrying through from the starting water source. These impurities are expected to largely be oxidized to carbonate over time in an alkaline electrolysis cell and, while carbonate can increase electrolyte resistance at very high concentrations, low levels of organic impurities are not expected to appreciably alter the carbonate concentration. Oxidation of organic impurities is likely to be incomplete and lead to some passivation of electrocatalysts. In addition, certain oxidized organic impurities could act as chelating agents, which could provide an additional mechanism for electrocatalyst degradation, either through passivation or dissolution.

For giga Watt (GW) scale electrolysis units, the buildup of impurities in the electrolyte would necessitate the replacement of thousands of metric tons (MT) of caustic electrolyte. This represents an enormous materials cost and logistical challenge. Furthermore, disposal of so much KOH solution has significant environmental impact.

Purification of the KOH electrolyte, thereby reducing the level(s) of one, some or all of the above impurities, is a desirable option and could enable its refurbishment and re-use if a workable purification strategy is available. For those impurities which have an extremely low specification in KOH electrolytes, e.g., iron (0.2 ppm - see Table 2), a suitable purification would help prevent early damage to electrolysis cells using electrolyte that does not meet those specifications.

Several strategies for purifying alkaline electrolytes are known in the art.

US1562805 discloses recrystallization of hydroxide solutions to remove sodium hydroxide from potassium hydroxide and *vice versa.* In addition, EP2091868 discloses recrystallization of potassium hydroxide solution under careful temperature control to reduce chloride levels to as low as 1 ppm and iron and nickel levels in KOH to levels as low as 0.1 ppm. Removal of other impurities is not described by this method. However, while effective for some impurities, temperature-controlled recrystallization for GW-scale quantities of KOH represents an enormous capital expenditure for large recrystallization vessels and expensive temperature control systems, not to mention recrystallization still results in a substantial caustic waste stream to be dealt with.

Ion exchange, commonly used for water purification, is not an option for removal of trace impurities from concentrated hydroxide solutions owing to the very high concentration of hydroxide (OH⁻), which is even higher than would typically be used to regenerate anion exchange resins. The ~7 M concentration of potassium cations in 30 wt.% aqueous KOH solution also precludes removal of trace impurity cations from such a concentrated solution.

There remains a need for an improved process for removing or at least reducing the levels of critical impurities such as dissolved transition metals, *e.g.,* iron; inorganic anions such as sulfates and carbonates; and/or organic impurities which can accumulate in concentrated aqueous hydroxide solutions, specifically concentrated aqueous potassium hydroxide solutions such as 25-30 wt.% potassium hydroxide solutions used as electrolytes in alkaline water electrolysis (AWE).

The present invention focuses on additive chemistries capable of precipitating the target impurities in a form which may then be removed by settling and/or filtration, because these types of strategies are more readily scalable and can make use of existing electrolyte solution preparation equipment where solids addition, mixing, and filtration is already available.

According to the first aspect of the present invention, there is provided a process for purifying a concentrated aqueous hydroxide solution comprising at least one target impurity selected from the group consisting of dissolved transition metals, inorganic anions, and dissolved organic compounds, said process comprising adding to the hydroxide solution at least one precipitation additive selected from the group consisting of water-soluble salts of alkaline earth metals; nickel (II) hydroxide; and hydroxides or oxides of alkaline earth metals, provided that the surface area of the hydroxides or oxides is more than 5 m²/g; contacting the hydroxide solution with the precipitation additive(s) for sufficient time to enable formation of at least one insoluble compound (or complex) comprising the at least one target impurity or a derivative thereof as a precipitate; and removing the precipitate from the hydroxide solution.

The process has particular application in the removal of dissolved iron, e.g., dissolved iron (II) and/or dissolved iron (III) species, and dissolved organic compounds such as catalyst and unreacted monomer components leached from PVC piping and other components of the electrolyzers and UHP water systems, such as phthalate esters and alkali phthalate hydrolysis products; phenolic components such as stabilizers in polypropylene; as well as trace humic acid type organic material carried through from the initial water source. The process also has application in the removal of carbonate anions and/or sulfate anions.

The process can be used simultaneously with other known processes for removing impurities using other precipitation additives. A particular advantage of the water-soluble salts of alkaline earth metals as precipitation additives is their efficiency in the removal of impurities, particularly dissolved iron (II) and/or dissolved iron (III) species, compared with other removal strategies or additives, which results in impurity removal with much lower generated solids requiring settling and/or filtration.

According to the second aspect of the present invention, there is provided a concentrated aqueous hydroxide solution purified according to the process of the first aspect for use as an electrolyte in alkaline water electrolysis (AWE).

According to a third aspect of the present invention, there is provided use of a concentrated hydroxide solution purified according to the process of the first aspect as an electrolyte in alkaline water electrolysis (AWE).

According to a fourth aspect of the present invention, there is provided a process for alkaline water hydrolysis (AWE) comprising using a concentrated hydroxide solution purified according to the process of the first aspect.

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing the preferred exemplary embodiments of the invention, it being understood that various changes may be made in the function and arrangement of elements without departing from the scope of the claimed invention.

Throughout the specification, the amount in which the or each precipitation additive is added to the concentrated aqueous hydroxide solution relative to the total amount of the at least one target impurity is given either as fraction or a multiple of the stoichiometric amount, calculated on a molar basis unless otherwise stated. The term "excess" in this context is to be interpreted accordingly.

The term "target impurity" is used throughout the specification to the identify the or each impurity which is removed by a specific precipitation additive identified herein. Other impurities which are not removed by these specific precipitation additives may also be present in the concentrated aqueous hydroxide solution.

The expression "the at least one target impurity" is intended to refer to the target impurity or, where there is more than one, each target impurity.

The expression "dissolved iron" is used throughout the specification to identify dissolved iron (II) and/or dissolved iron (III) species which are typically in the form of oxy-hydroxy anions and/or colloidal iron oxides. In this regard, at the very high pH of concentrated aqueous hydroxide solutions, e.g., a 30 wt.% potassium hydroxide solution, any dissolved iron (III) is likely present as FeO₂⁻ or ferrate oxoanion (simply an anion of the metal oxide complex). Dissolved iron (II) is most likely present as the FeO(OH)⁻, hydroxy ferrite anion.

For the avoidance of doubt, the term "ppm" means parts per million and the term "ppb" means parts per billion.

This invention seeks to solve the problem of removing or reducing the levels of critical impurities which can accumulate in concentrated hydroxide solutions, more specifically concentrated potassium hydroxide (KOH) solutions, more specifically from about 0.5 wt % to about 50 wt %, e.g., from about 25 wt % to about 35 wt %, or about 30 wt.%, potassium hydroxide solutions used as electrolytes in alkaline water electrolysis (AWE).

Specific impurities targeted for removal or reduction include, but are not limited to, dissolved transition metals such as iron; inorganic anions such as sulfate and carbonate; and organic impurities such as phthalate esters and their alkali phthalate hydrolysis products, phenolic components, and trace humic acid type organic material.

While strategies are described for the removal of carbonate and/or sulfate, the invention is particularly relevant for reducing the amount of dissolved iron and/or organic compounds to acceptable levels in the hydroxide solutions.

It will be noted that the alkalinity, as defined by the pH of these solutions, is extremely high. The pH of these solutions is typically more than 14 and more likely more than 14.5. For example, the theoretical pH of a 30 wt.% KOH_{(aq)} solution is 14.8 as calculated from the standard definition of pH. At such high alkalinity, standard water purification strategies of reverse osmosis and ion exchange for ionic impurities are typically ineffective due to the extremely high concentration of K⁺ and OH⁻ ions in 30 wt.% KOH_{(aq)} solution.

Chelex 100, a chelating cation exchange gel particularly selective for multivalent metal cations, has been used in the purification of carbonate solutions and in some cases alkaline solutions, but Comparative Example 2 shows it is ineffective in the removal of dissolved iron from the more concentrated alkaline electrolytes targeted for AWE applications.

While effective for some impurities, temperature-controlled recrystallization for GW-scale quantities of KOH represents an enormous capital expenditure for large recrystallization vessels and expensive temperature control systems, not to mention recrystallization still results in a substantial caustic waste stream to be dealt with.

In one embodiment this invention, there is provided a strategy for reducing the levels of dissolved iron in a 30 wt.% KOH electrolyte from more than 1 ppm to less than 0.2 ppm and preferably less than 0.1 ppm. While the invention includes the use of commercial, as opposed to the freshly precipitated nickel hydroxide previously described in the literature for removal of iron from electrolysis electrolytes, the inventors describe additional embodiments for the removal of dissolved iron, which avoid the use of carcinogenic Ni(OH)₂. The inventors have surprisingly found that cations of alkaline earth metals, particularly calcium, magnesium and barium, are effective in the removal of target impurities, particularly dissolved iron, from highly alkaline aqueous solutions, e.g., aqueous solutions having a pH of more than 14.

Suitable species include oxides and hydroxides of calcium and magnesium as well as more soluble sulfate and nitrate salts.

Specific examples of suitable precipitation additives include calcium (II) oxide (CaO), calcium (II) hydroxide (Ca(OH)₂), calcium (II) carbonate (CaCO₃), calcium (II) nitrate (Ca(NO₃)₂), calcium (II) sulfate (CaSO₄), magnesium (II) hydroxide (Mg(OH)₂), magnesium (II) oxide (MgO), magnesium (II) carbonate (MgCO₃), magnesium (II) sulfate (MgSO₄), magnesium (II) nitrate (Mg(NO₃)₂), nickel (II) hydroxide (Ni(OH)₂) and barium (II) hydroxide (Ba(OH)₂) as well as other water-soluble magnesium species. Of these, the use of the soluble salts, e.g., sulfate and nitrate salts, of calcium or magnesium are typically preferred.

The inventors have established that the hydroxide or oxide of alkaline earth metals should have a surface area of more than 5 m²/g, *e.g.,* more than 10 m²/g or more than 50 m²/g, preferably more than 100 m²/g. The inventors believe that the reaction between alkaline earth metal hydroxides or oxides, particularly magnesium (II) hydroxide, and soluble iron is heterogeneous since the hydroxide or oxide has negligible solubility in concentrated aqueous hydroxide solution. The higher the surface area of hydroxide or oxide, the greater the efficiency of the iron removal, *i.e.,* lesser amounts of the hydroxide or oxide with a higher surface area are required to remove a given amount of iron compared with an identical hydroxide or oxide having a lower surface area.

Typically, the upper limit for the surface area is no more than 200 m²/g, *e.g.,* no more than 150 m²/g, as alkaline earth metal hydroxides or oxides having higher surface areas would be difficult to come by and/or difficult to filter.

Generally, the or each precipitation additive is typically added in an amount that is sufficient to reduce the concentration of the at least one target impurity to an acceptable level. The skilled person would appreciate what is an acceptable level for a given impurity. For certain impurities, including iron, sulfate and carbonate, an acceptable level is likely to be no more than the target levels given in Table 1.

The amount of a precipitation additive to be added will typically depend on the identities of the additive and target impurity. In this regard, the amount may be less than the total stoichiometric amount of the at least one target impurity, *e.g.,* from about 50% to no more than 99% of the total stoichiometric amount. However, in other embodiments, the or, where there is more than one, at least one or each precipitation additive is added in excess based on the total stoichiometric amount of the at least one target impurity. The excess may be at least a 2-fold excess, or at least a 5-fold excess, or at least a 10-fold excess, or at least a 20-fold excess. At its upper end, the excess may be no more than a 5000-fold excess, or no more than a 4000-fold excess, or no more than a 2000-fold excess, or no more than a 1000-fold excess.

The process may be a batch process in which the electrolyzer is offline, or a continuous process where the electrolyzer is online. In this regard, the process typically takes place at a temperature in a range from about 10°C to about 90°C, or from about 15°C to about 50°C, or from about 15 to about 30°C.

The hydroxide solution is contacted with the precipitation additive(s) for sufficient time to enable the formation of the at least one insoluble compound (or complex). This period of time is typically in a range from about 0.1 h to about 10 h, *e.g.,* from about 0.2 h to about 6 h, or from about 0.3 h to 2 h. The solution is typically stirred or otherwise agitated during this period. As would be readily appreciated by the skilled person, stirring (or other agitation) improves mixing (and hence contact) of the precipitation additive(s) with the hydroxide solution which in turn improves reaction and formation of the precipitate.

The precipitate is typically removed from the solution by filtration through a filter. A suitable filter may have an average pore size in a range from about 0.4 µm to about 0.5 µm, *e.g.,* about 0.45 µm.

A flocculant and/or a coagulant may be added to the solution to aid filtration of the precipitate. Suitable flocculants include calcium (II) oxide and calcium (II) hydroxide. A suitable coagulant is sodium aluminate. The flocculant or the coagulant may be added to the solution in an amount of less than about 500 ppm, *e.g.,* from about 10 ppm to about 100 ppm.

Specific examples of combinations of target impurities and precipitation additives include the following.

Where carbonate anions are present as the target impurity in the concentrated aqueous hydroxide solution, the precipitation additive may be barium (II) hydroxide. In these embodiments, the barium (II) hydroxide is typically added in an amount in a range from about 80% to about 100% of the stoichiometric amount of the carbonate anions.

Where carbonate anions and sulfate anions are both present as target impurities in the concentrated aqueous hydroxide solution, the precipitation additive(s) may be barium (II) hydroxide, optionally together with calcium (II) hydroxide. In these embodiments, the barium (II) hydroxide is typically added in an amount in a range from about 80% to about 100% of the total stoichiometric amount of the carbonate and sulfate anions. Where calcium (II) hydroxide is also added, it is typically added in an amount in a range from about 100% to about 150% of the total stoichiometric amount of the sulfate anions.

Where sulfate anions are present as target impurities in the concentrated aqueous hydroxide solution, the precipitation additive may be calcium (II) hydroxide. In these embodiments, the calcium (II) hydroxide is typically added in an amount in a range from about a 5-fold excess to about a 10-fold excess, based on the stoichiometric amount of the sulfate anions.

Where dissolved iron is present as a target impurity in the concentrated aqueous hydroxide solution, the precipitation additive may be nickel (II) hydroxide. In these embodiments, the nickel (II) hydroxide is typically added in an amount in a range from about a 200-fold excess to about a 300-fold excess, based on the total stoichiometric amount of the dissolved iron.

Where dissolved iron is present as an impurity in the concentrated aqueous hydroxide solution, the precipitation additive may be selected from the group consisting of calcium (II) hydroxide, calcium (II) oxide and magnesium (II) sulfate. Where calcium (II) hydroxide is used, it is typically added in an amount in a range from about a 1000-fold excess to about a 2000-fold excess, based on the total stoichiometric amount of the dissolved iron (II). Where calcium (II) oxide is used, it is typically added in an amount in a range from about a 2000-fold excess to about a 3000-fold excess, based on the total stoichiometric amount of the dissolved iron. Where magnesium (II) sulfate is used, it is typically added in an amount in a range from about 20-fold excess to about 50-fold excess, based on the total stoichiometric amount of the dissolved iron.

Where sulfate anions and dissolved iron are present as impurities in the concentrated aqueous hydroxide solution, the precipitation additive may be selected from magnesium (II) nitrate and calcium (II) nitrate. Where magnesium (II) nitrate is used, it is typically added in an amount in a range from about a 2-fold excess to about 4-fold excess, based on the total stoichiometric amount of the sulfate anions and dissolved iron. Where calcium (II) nitrate is used, it is typically added in an amount in a range from about a 5-fold excess to a 15-fold excess, based on the total stoichiometric amount of the sulfate anions and dissolved iron.

Where dissolved iron and at least one organic compound are present as target impurities in the concentrated aqueous hydroxide solution, the precipitation additive may be selected from the group consisting of magnesium (II) nitrate and calcium (II) nitrate. Where magnesium (II) nitrate is used, it typically added in an amount in a range from about a 5-fold excess to about a 10-fold excess, based on the total stoichiometric amount of the dissolved iron and organic compound(s). Where calcium (II) nitrate is used, it is typically added in a range of about 10-fold excess to about 20-fold excess, based on the total stoichiometric amount of the dissolved iron and organic compound(s).

Where dissolved iron is present as a target impurity in the concentrated aqueous hydroxide solution, the precipitation additive may be selected from the group consisting of magnesium (II) nitrate and calcium (II) nitrate. Where magnesium (II) nitrate is used, it is typically added in an amount in a range from about a 10-fold excess to about a 300-fold excess, based on the total stoichiometric amount of the dissolved iron. Where calcium (II) nitrate is used it is typically added in a range of about 100-fold excess to 300-fold excess, based on the total stoichiometric amount of the dissolved iron.

Magnesium sulfate and magnesium nitrate are typically preferred for removing dissolved iron, because they are effective at very low addition rates relative to iron. For example, less than 100 ppm Mg²⁺ in the form of magnesium sulfate and even less than 25 ppm Mg²⁺ in the form of nitrate or sulfate are typically effective in reducing the iron level in 30 wt.% KOH from about 5 ppm to less than 0.1 ppm. While sulfate and nitrate are added to the electrolyte with the addition of these sources of Mg²⁺, the effective addition level is so low that these levels remain below those targeted by commercial electrode manufacturers.

Without intending to be bound by theory it is believed that, in contrast to the water insoluble oxides and hydroxides of these alkaline earth cations, addition of the water-soluble sulfate and nitrate salts allows enhanced reactivity with iron during the hydrolysis of these species in concentrated aqueous hydroxide solutions due to formation of Mg(OH)₂ and Ca(OH)₂ having a smaller crystallite size than available commercially. In these embodiments, due to the very low solubility of the ultimately formed alkaline earth hydroxides, Mg(OH)₂ and Ca(OH)₂, after filtration, these materials remain well below typical reported specifications for them. It is believed that one or a combination of these strategies will also result in reduction of other dissolved transition metal impurities, particularly first row transition metal impurities as well as zinc.

It is less likely that carbonate (CO₃²⁻) and sulfate (SO₄²⁻) accumulate to levels where they significantly affect electrolyzer performance. Nevertheless, this invention provides methods for reducing these impurities in concentrated aqueous hydroxide in the event of any excursion in water purity or inerting, which causes these impurities to rise to unacceptable levels.

A small excess of barium hydroxide has also been described for removal of carbonate from KOH solution as barium carbonate owing to the reasonable solubility of barium hydroxide in concentrated alkali solutions which can lead to more than several hundred ppm Ba²⁺ in the purified KOH solution. In contrast, the inventors have found that the reaction of barium hydroxide with carbonate is close to stoichiometric so, if added carefully at levels slightly below the level of carbonate, barium hydroxide can be added to remove carbonate from high levels to acceptable levels without appreciably increasing the Ba²⁺ content of the solution.

Surprisingly Ba²⁺ is not stoichiometric in the precipitation of sulfate from 30 wt.% KOH as it is commonly known for quantitative sulfur removal from a range of aqueous solution from pH 2 to pH 12. When attempts were made to use Ba(OH)₂ to reduce sulfate levels below 1000 ppm, the level was typically reduced to about 400 to 500 ppm with significant quantities of Ba(OH)₂ remaining unreacted and soluble in the KOH solution. Sulfate removal without significantly increasing other impurities required the use of excess Ca(OH)₂. With excess Ca(OH)₂, sulfate impurity concentrations could be reduced from almost 3000 ppm to less than 400 ppm without significantly increasing Ca²⁺ concentration in the solution.

In another embodiment this invention provides a method of reducing the level of total dissolved organic compounds (or TOC) in the electrolyte solution from a starting concentration of about 25 to 50 ppm to a lower level. In this embodiment, humic acid is used as a proxy for general organic matter entering the electrolyte system. This method typically involves the addition of a water-soluble magnesium or calcium salt, which precipitates out at least a portion of the organic impurities as magnesium or calcium salts, which may be filtered from the KOH electrolyte, thereby reducing the concentration of these organic impurities in the electrolyte.

Suitable water soluble magnesium and calcium salts include, but are not limited to Mg(NO₃)₂, MgSO₄, Ca(NO₃)₂, and CaSO₄. The water-soluble salts of magnesium or calcium are typically added at concentrations of less than 500 ppm by weight and preferably less than 100 ppm by weight. Alternatively, insoluble MgO, Mg(OH)₂,MgCO₃, CaO, Ca(OH)₂, or CaCO₃ may be added, provided the surface area is higher than 50 m²/g and preferably greater than 100 m²/g. Standard grade MgO/Mg(OH)₂/MgCO₃ and CaO/Ca(OH)₂/CaCO₃ is of much lower surface area and as exemplified herein, require much higher loadings than the water soluble sources.

Without intending to be bound by theory, it is believed that addition of water-soluble magnesium and calcium salts to the concentrated KOH electrolyte solution leads to the precipitation of higher surface area magnesium and calcium hydroxides. It is not clear that rapid addition of a soluble magnesium salt to 30 wt.% KOH solution with pH > 14 would lead to similar high surface area materials, nor was the removal of iron and organic impurities expected at this pH.

Filtration methods can include but are not limited to pressure, gravity, vacuum, or centrifugal filtration using any aqueous KOH compatible material, but preferred materials included polypropylene, Nylon, polysulfone, fluoropolymers such as perfluoroalkoxy alkanes (PFA), *etc.* Filter pore size will be chosen to maximize flow, while minimizing solids passthrough as determined by magnesium content of the purified and filtered KOH solution. Ideally, the magnesium content of the purified filtered solution is less than 0.5 ppm and preferably less than 0.1 ppm.

Low levels, typically less than 500 ppm or from about 10 ppm to about 100 ppm, of flocculants (such as calcium oxide or calcium hydroxide) or coagulants (such as sodium aluminate) may be added to aid in the filtration of the purification precipitates generated.

It will be understood that the purification steps described here (and in the previous provisional filing) could be performed before the electrolyte solution has been charged into the electrolyzer to remove unacceptable impurities at the beginning of life of the electrolyzer, or even as solid KOH is being dissolved in UHP water to prepare the (*e.g.,* 30 wt.%) KOH electrolyte. Alternatively, these purification steps may be used after extended circulation of the electrolyte in the electrolyzer overwhich time unacceptable levels of impurities develop being concentrated from the water feed, piping or the electrolyzer itself. Alternatively, it is likely that circulation of KOH through a bed or filter cake of high surface area Mg(OH)₂ or Ca(OH)₂ could remove targets impurities, such as iron from the electrolyte and maintain these impurities at acceptable levels.

Aspects of the invention include:
#1. A process for purifying a concentrated aqueous hydroxide solution comprising at least one target impurity selected from dissolved transition metals, inorganic anions, and dissolved organic compounds, said process comprising:
   adding to the hydroxide solution at least one precipitation additive selected from the group consisting of water-soluble salts of alkaline earth metals; nickel (II) hydroxide; and hydroxides or oxides of alkaline earth metals, provided that the surface area of the hydroxides or oxides is more than 5 m²/g;
   contacting the solution with the precipitation additive(s) for sufficient time to enable formation of at least one insoluble compound comprising the at least one target impurity or a derivative thereof as a precipitate; and
   removing the precipitate from the solution.
#2. The process of #1, wherein the dissolved transition metals are dissolved iron, *e.g.,* dissolved iron (II) and/or dissolved iron (III) species.
#3. The process of #1, wherein the inorganic anions are carbonate anions and sulfate anions.
#4. The process #1, wherein the dissolved organic compounds are phthalate esters and alkali metal, e.g., potassium, phthalate derivatives thereof; phenolic resins or components; and humic acid-type material.
#5. The process of #1, wherein the alkaline earth metals are calcium, magnesium and barium.
#6. The process of #1, wherein the or, where there is more than one, at least one or each precipitation additive is selected from the group consisting of calcium (II) oxide, calcium (II) hydroxide, calcium (II) carbonate, calcium (II) sulfate, calcium (II) nitrate, magnesium (II) oxide, magnesium (II) hydroxide, magnesium (II) carbonate, magnesium (II) sulfate, magnesium (II) nitrate, nickel (II) hydroxide and barium (II) hydroxide.
#7. The process of #1, wherein the, or where there is more than one, at least one or each precipitation additive is selected from the group consisting of calcium (II) sulfate, calcium (II) nitrate, magnesium (II) sulfate and magnesium (II) nitrate.
#8. The process of #1 wherein the hydroxide or oxides of alkaline earth metals have a surface area of more than 10 m²/g, e.g., more than 50 m²/g or more than 100 m²/g, but preferably less than 200 m²/g.
#9. The process of #1, wherein the or, where there is more than one, at least one or each precipitation additive is added in an amount that is sufficient to reduce the concentration of the at least one target impurity to an acceptable level.
#10. The process of #1, wherein the or, where there is more than one, at least one or each precipitation additive is added in an amount that is less than the stoichiometric amount, based on the total amount of the at least target impurity.
#11. The process of #1, wherein the or, where there is more than one, at least one or each precipitation additive is added in excess, based on the total amount of the at least one target impurity.
#12. The process of #11, wherein the or, where there is more than one, at least one or each precipitation additive is added in at least a 2-fold excess, or at least a 5-fold excess, or at least a 10-fold excess, or at least a 20-fold excess, based on the total amount of the at least one target impurity.
#13. The process of #11, wherein the or, where there is more than one, one of the precipitation additives is barium (II) hydroxide added in no more than a 3-fold excess, based on the total amount of the at least one target impurity.
#14. The process of #1, wherein the process takes place at a temperature in a range from about 10°C to about 90°C, or from about 15°C to about 50°C, or from about 15 to about 30°C.
#15. The process of #1, wherein the solution is contacted with the precipitation additive(s) for a period of time in a range from about 0.1 h to about 10 h, *e.g.,* from about 0.2 h to about 6 h.
#16. The process of #1, wherein carbonate anions are present as a target impurity in the concentrated aqueous hydroxide solution and the precipitation additive is barium (II) hydroxide.
#17. The process of #16, wherein the barium (II) hydroxide is added in an amount in a range from about 80% to about 100% of the stoichiometric amount, based on the total amount (mol) of the carbonate anions.
#18. The process of #1, wherein carbonate anions and sulfate anions are present as target impurities in the concentrated aqueous hydroxide solution and the precipitation additive(s) is barium (II) hydroxide, optionally together with calcium (II) hydroxide.
#19. The process of #18, wherein the barium (II) hydroxide is added in an amount in a range from about 80% to about 100% of the stoichiometric amount, based on the total amount (mol) of the carbonate and sulfate anions.
#20. The process of #18, wherein calcium (II) hydroxide is added in an amount in a range from about 100% to about 150% of the stoichiometric amount, based on the total amount (mol) of the sulfate anions.
#21. The process of #1, wherein sulfate anions are present as a target impurity in the concentrated aqueous hydroxide solution and the precipitation additive is calcium (II) hydroxide.
#22. The process of #21, wherein the calcium (II) hydroxide is added in an amount in a range from about a 5-fold excess to about a 10-fold excess, based on the total stoichiometric amount of the sulfate anions.
#23. The process of #1, wherein dissolved iron is present as a target impurity in the concentrated aqueous hydroxide solution and the precipitation additive is nickel (II) hydroxide.
#24. The process of #23, wherein the nickel (II) hydroxide is added in an amount in a range from about a 200-fold excess to about a 300-fold excess, based on the total stoichiometric amount of the dissolved iron.
#25. The process of #1, wherein dissolved iron is present as a target impurity in the concentrated aqueous hydroxide solution and the precipitation additive is selected from the group consisting of calcium (II) hydroxide, calcium (II) oxide and magnesium (II) sulfate.
#26. The process of #25, wherein the calcium (II) hydroxide is added in an amount in a range from about a 1000-fold excess to about a 2000-fold excess, based on the total stoichiometric amount of the dissolved iron.
#27. The process of #25, wherein the calcium (II) oxide is added in an amount in a range from about a 2000-fold excess to about a 3000-fold excess, based on the total stoichiometric amount of the dissolved iron.
#28. The process of #25, wherein the magnesium (II) sulfate is added in an amount in a range from about 20-fold excess to about 50-fold excess, based on the total stoichiometric amount of the dissolved iron.
#29. The process of #1, wherein sulfate anions and dissolved iron are present as target impurities in the concentrated aqueous hydroxide solution and the precipitation additive is selected from magnesium (II) nitrate and calcium (II) nitrate.
#30. The process of #29, wherein the magnesium (II) nitrate is added in an amount in a range from about a 2-fold excess to about 4-fold excess, based on the total stoichiometric amount of the sulfate anions and dissolved iron.
#31. The process of #29, wherein the calcium (II) nitrate is added in an amount in a range from about a 5-fold excess to about a 15-fold excess, based on the total stoichiometric amount of the sulfate anions and dissolved iron.
#32. The process of #1, wherein dissolved iron and at least one organic compound are present as target impurities in the concentrated aqueous hydroxide solution and the precipitation additive is selected from the group consisting of magnesium (II) nitrate and calcium (II) nitrate.
#33. The process of #32, wherein the magnesium (II) nitrate is added in an amount in a range from about a 5-fold excess to about a 10-fold excess, based on the total stoichiometric amount of the dissolved iron and organic compound(s), or the calcium (II) nitrate is added in an amount in a range from about a 10-fold excess to about a 20-fold excess, based on the total stoichiometric amount of the dissolved iron and organic compound(s).
#34. The process of #1, wherein dissolved iron is present as a target impurity in the concentrated aqueous hydroxide solution and the precipitation additive is selected from the group consisting of magnesium (II) nitrate and calcium (II) nitrate.
#35. The process of #34, wherein the magnesium (II) nitrate is added in an amount in a range from about a 10-fold excess to about a 300-fold excess, based on the total stoichiometric amount of the dissolved iron, or the calcium (II) nitrate is added in an amount in a range from about a 100-fold excess to about a 300-fold excess, based on the total stoichiometric amount of the dissolved iron.
#36. The process of #1, wherein the precipitate is removed from the solution by filtration through a filter.
#37. The process of #36, wherein the filter has an average pore size in a range from about 0.4 µm to about 0.5 µm, e.g., about 0.45 µm.
#38. The process of #1, wherein a flocculant and/or a coagulant is/are added to the solution to aid filtration of the precipitate.
#39. The process of #38, wherein the flocculant is selected from the group consisting of calcium (II) oxide and calcium (II) hydroxide.
#40. The process of #38, wherein the coagulant is sodium aluminate.
#41. The process of #38, wherein the flocculant or the coagulant is added to the solution in an amount of less than about 500 ppm, e.g., from about 10 ppm to about 100 ppm.
#42. The process of #1, wherein the concentrated aqueous hydroxide solution is concentrated aqueous potassium hydroxide solution.
#43. The process of #42, wherein the concentrated aqueous potassium hydroxide solution has a concentration in a range from about 0.5 wt. % to about 50 wt. %, e.g., from about 25 wt. % to about 35 wt. %, or about 30 wt.%, potassium hydroxide.
#44. The process of #42, wherein the concentrated aqueous potassium hydroxide solution has a pH of more than pH 14, *e.g.,* more than pH 14.5.
#45. A process for purifying an aqueous solution of 25 wt. % to 35 wt. % potassium hydroxide comprising at least one target impurity selected from the group consisting of dissolved iron (II), dissolved iron (III), sulfate anions and organic compounds, said process comprising:
   adding to the potassium hydroxide solution, at least one precipitation additive selected from the group consisting of water-soluble salts of magnesium (II) cations and calcium (II) cations in an amount up to a 30-fold excess, based on the total stoichiometric amount of the at least one target impurity;
   contacting the solution with the precipitation additive(s) for a period of time in a range from about 0.2 h to about 6 h to enable formation of at least one insoluble compound comprising the at least one target impurity or a derivative thereof as a precipitate; and
   filtering the precipitate from the solution.
#46. A process for purifying an aqueous solution of 25 wt. % to 35 wt. % potassium hydroxide comprising carbonate anions as a target impurity, said process comprising:
   adding to the potassium hydroxide solution, barium (II) hydroxide as a precipitation additive in an amount up to a 3-fold excess, based on the total stoichiometric amount of the target impurity;
   contacting the solution with the precipitation additive for a period of time in a range from about 0.2 h to about 6 h to enable formation of at least one insoluble compound comprising the target impurity or a derivative thereof as a precipitate; and
   filtering the precipitate from the solution.
#47. A concentrated aqueous hydroxide solution purified according to the process of #1 for use as an electrolyte in alkaline water electrolysis (AWE).
#48. A process for alkaline water hydrolysis (AWE) comprising using a concentrated hydroxide solution purifies according to the process of #1.

### EXAMPLES

The methods described herein in the following examples were characterized by the following techniques using the instrumentation described. IR spectra were collected on a Nicolet iS10 FTIR spectrometer. ICP-OES analysis was performed using a Perkin Elmer Optima 5300 DV optical emission spectrometer. A duplicate determination was carried out on each sample area submitted for analysis. Standards were prepared in the concentration range of 0.01 ppm to 10 ppm from multi-element stock solutions. A minimum of two wavelengths were included in the analysis sequence to confirm concentrations and evaluate spectra for potential interferences. The sample analysis was bracketed by calibration blank and standard solution measurements. A 1ppm QC check was measured during sample analysis. Ion Chromatography was performed on a Metrohm ion chromatography system with suppressed conductivity detection. Powder X-ray diffraction (XRD) data on precipitated and commercial magnesium compounds were collected on pressed pucks of sample using a Rigaku Miniflex 600 powder X-ray diffractometer. Patterns were collected using Cu K<α> radiation from 5 to 90° 2θ. Scanning electron microscopy (SEM) micrographs were collected on filtered samples of commercial and precipitated magnesium compounds using a Thermo Scientific Phenom XL table-top scanning electron microscope. UV-Vis Spectroscopy results were collected using a Thermo Scientific Evolution One Plus UV-Vis Spectrophotometer. UV-Vis signals were collected at 560 nm using a 4.5 mL polymethyl methacrylate (PMMA) cuvette.

For the semi-quantitative analysis of carbonate in 30 wt.% KOH solutions, a single drop of KOH analyte solution was placed between 25 mm calcium (II) fluoride (CaF₂) optical windows in a nitrogen (N₂) purge box to prevent additional carbonate forming from atmospheric CO₂. The IR spectrum was collected between 1200-4000 cm⁻¹. The presence of the band of carbonate was observable at 1400 cm⁻¹. Carbonate in the analyte could be quantified by comparison with carbonate standards in 30 wt.% KOH ranging from 0.2 to 2 wt.%.

Semiquantitative analysis of iron down to less than 0.1 ppm was performed colorimetrically using the MQuant Iron Test Method from Merck KGAa. Semiquantitative analysis of reduction in humic acid loading starting from 50 and 25 ppm (by weight) concentrations was done colorimetrically vs standards of different concentration. Quantitative analysis of iron down to less than 0.01 ppm was performed colorimetrically using UV-vis spectroscopy using the MQuant Iron Test Method from Merck KGAa. A calibration curve using the MQuant Iron Test Method and Fe(III)(NO₃)₂standards was used for comparison.

Quantitative measurements of carbonate and sulfate were determined for spiked and treated 30 wt.% KOH samples using Ion chromatography. Metallic cations, Ca²⁺, Mg²⁺, Ba²⁺, Fe²⁺/Fe³⁺, Zn²⁺, as well as silica and alumina as Si and Al were determined by ICP-OES.

Standard 30 wt.% KOH solutions were prepared from Fisher certified 45 wt.% potassium hydroxide solution and Fisher HPLC Grade certified water.

Reagents used to spike in impurities into KOH solution were acquired from Sigma Aldrich: 99.95% potassium carbonate, potassium sulfate, 50% silica sol, iron (II) chloride; iron (III) nitrate and humic acid.

Precipitating additives were also purchased from Sigma Aldrich: calcium oxide, calcium hydroxide, barium hydroxide, nickel hydroxide, magnesium nitrate, calcium nitrate and magnesium sulfate. Magnesium hydrotalcite was acquired from Puralox and activated to 600°C prior to use. Calcium hydrotalcite, Ca-HTC, was prepared according to Bianca R. Gevers and Frederick J.W.J. Labuschagné (Crystals 2020, 10, 672.) and used without further purification.

In typical experimental examples and comparative examples, spiked impurities were added to 30 wt.% pure KOH with stirring in a N₂ purged glove box or under N₂ purge from a Schlenk system to prevent carbon dioxide (CO₂) exposure and the spiked solution was filtered if necessary to remove any undissolved solids prior to impurity removal studies. Individual, or multiple precipitation additives were added to the stirred solution in a N₂ purge box or under N₂ purge, and stirring was continued for 30 minutes to 4 hours, e.g., two to four hours.

The resulting KOH solution and precipitate were filtered through less than 1 µm membrane filters. Membrane materials included 0.6 µm polyvinylidene fluoride (PVDF) (some discoloration was observed), 0.45 µm Nylon, and 0.45 µm polypropylene. Solutions were analyzed prior to additive addition and after filtration by the methods described above.

Analytical Data for spiked and treated 30 wt.% KOH samples showing carbonate, sulfate, higher-level silicate removal, and Ni(OH)₂ removal of Fe(ll) used in the Examples and Comparative Examples are shown in Table 3.

**TABLE 3**

| **Sample** | **Spiked conc( ppm)** | | | | | | | | **After stirring and filtration (ppm)** | | | | | | | |
|---|---|---|---|---|---|---|---|---|---|---|---|---|---|---|---|---|
| | Ca | Mg | Ba | CO₃ | SO₄ | SiO₂ | Al₂O₃ | Fe | Ca | Mg | Ba | CO₃ | SO₄ | SiO₂ | Al₂O₃ | Fe |
| 30% KOH as prepared | ND | ND | ND | ND | ND | ND | ND | ND | <0.3 | ND | <0.2 | <400 | 22 | < 6 | <2 | < 0.24 |
| Ca(OH)²+ K²CO³ | 6000 | ND | ND | 8700 | ND | ND | ND | ND | ND | ND | ND | 8700 | ND | ND | ND | ND |
| 1 CaO + 1 K2CO3 | 6000 | ND | ND | 8700 | ND | ND | ND | ND | ND | ND | ND | 8700 | ND | ND | ND | ND |
| 1 Ba(OH)2 + 1K2CO3 | ND | ND | 19000 | 8700 | ND | ND | ND | ND | ND | ND | 10 | <400 | ND | ND | ND | ND |
| 1 Ba(OH)2 + 1K2CO3 + 0.2 K2SO4 | ND | ND | 19000 | 8700 | 1600 | ND | ND | ND | ND | ND | 150 | 650 | 460 | ND | ND | ND |
| 1 Ba(OH)2 + Ca(OH)₂ + 1K2CO3 + 0.2 K2SO4 + SiO2 | 6000 | ND | 18000 | 8700 | 830 | 5000 | ND | ND | <0.3 | ND | 190 | 1000 | <75 | 4700 | ND | ND |
| 8Ca(OH)₂ + 6 K₂CO₃ + K₂SO₄ | 9250 | ND | ND | 8700 | 2700 | ND | ND | ND | 2.7 | ND | ND | 8700 | 385 | ND | ND | ND |
| Mg HTC + SiO2 | ND | 3000 | ND | ND | ND | 750 | ND | ND | ND | ND | ND | ND | ND | < 75 | ND | ND |
| 0.3 wt% Ni(OH)₂ +Fe(II) | ND | ND | ND | ND | ND | ND | ND | 12 | ND | ND | ND | ND | ND | ND | ND | < 0.2 |

### Comparative Example 1

This example attempts to reproduce the work by P. Sipos et al (Analyst, 2000, 125, 955-958). CaO was added to 30 wt.% KOH spiked to 2 wt.% potassium carbonate (8700 ppm carbonate) and stirred for 4 hrs. A thick slurry was formed, which was relatively slow to settle. A small amount of the slurry was filtered through 0.45 µm syringe filters and analyzed by IR.

No difference in intensity of the carbonate band observed at 1400 cm⁻¹ was observed from before the treatment, suggesting no removal of carbonate at these levels by this method. A similar excess of Ca(OH)₂ was tried and also showed no removal of carbonate based on IR analysis.

### Example 1

Similar to Comparative Example 1, a 30 wt.% KOH solution spiked with 2 wt.% K₂CO₃ (8700 ppm CO₃²⁻) was treated with barium hydroxide monohydrate, Ba(OH)₂ H₂O, at nearly stoichiometric levels for the formation of BaCO₃ from CO₃²⁻ in solution. After stirring for 4 hrs and then filtering a portion of the solution through a 0.45 µm Nylon syringe filter, IR analysis showed the presence of no carbonate above a baseline level for pure carbonate. The detection limit for K₂CO₃ by IR was determined to be 0.1 wt%, (400 ppm CO₃²⁻). ICP-OES of the solution showed the Ba²⁺ concentration of the solution was slightly elevated at 10 ppm, so sub-stoichiometric concentrations of Ba(OH)₂ with incomplete CO₃²⁻ removal will be required.

### Comparative Example 2

In this example, a mixture of Ba(OH)₂ in slight excess and Ca(OH)₂ in large excess were used to remove carbonate, sulfate, and silicate from a 30 wt.% KOH solution as shown in Table 3. The quantities of Ba and Ca as the precipitation additives Ba(OH)₂ and Ca(OH)₂ added are shown as ppm in the first column along with the concentrations of spiked impurities sulfate, and silicon as dissolved silica. The total quantities of the additives and spiked impurities are shown in major column 2. Major column 3 shows the concentration in ppm after stirring the solution with additives for 3 hrs followed by filtering the solution through a 0.45 µm Nylon filter. The results show that in this mixed system, the carbonate is reduced from 2 wt.% to 0.3 wt.%, by near stoichiometric Ba(OH)₂ and sulfate is reduced to non-detectable levels by excess Ca(OH)₂. Dissolved silica is unaffected by the precipitating additives at this pH.

This example shows the importance of giving the Ba(OH)₂ sufficient time to react with carbonate, otherwise, the Ba(OH)₂ has sufficient solubility in KOH to increase Ba concentration to unacceptable levels.

### Example 2

Similar to previous examples a 30 wt.% KOH solution was spiked with 8700 ppm carbonate as potassium carbonate and 2700 ppm sulfate as potassium sulfate. Excess Ca²⁺ (9250 ppm) as calcium hydroxide, was added to the solution and the resulting slurry was stirred for 4 hrs at ambient temperature. At this time a portion of the slurry was filtered through 0.45 µm Nylon filter media. Solutions were analyzed by IR spectroscopy and ion chromatography as described above. The resulting clear solution showed no removal of carbonate, but 85% removal of sulfate, indicating excess calcium hydroxide is effective for removing sulfate from more than 1000 ppm to well below 500 ppm levels.

### Example 3

Similar to previous examples a 30 wt.% KOH solution was spiked with 12 ppm dissolved iron species by adding FeCl₂ to the KOH solution, stirring the solution in air for 12 hrs and then filtering. Iron level of spiked solution was determined by ICP. To the spiked solution 3000 ppm nickel hydroxide, Ni(OH)₂, was added and stirred for 4 hrs. At this time a portion of the slurry was filtered through 0.45 µm Nylon filter media. The solution was analyzed by ICP-OES as described above. The resulting clear solution show no detectable amounts of iron, less than 0.2 ppm detection limit and confirm that high levels of Ni(OH)₂ can remove dissolved iron species even when not freshly precipitated from ultrahigh purity nickel salts.

**TABLE 4**

| **Sample** | **Spiked conc( ppm)** | | | | | | | | | | **After stirring and filtration (ppm)** | | | | | | | | | |
|---|---|---|---|---|---|---|---|---|---|---|---|---|---|---|---|---|---|---|---|---|
| | Ca | Mg | Ba | CO₃ | SO₄ | SiO₂ | Al₂O₃ | Fe | Zn | TOC | Ca | Mg | Ba | CO₃ | SO₄ | SiO₂ | Al₂O₃ | Fe | Zn | TOC |
| Spiked 30% KOH | <0.4 | ND | ND | ND | 30 | 49 | <09 | 52 | 89 | ND | <0.4 | ND | ND | ND | 90 | 49 | <0 9 | 52 | 89 | ND |
| Ca-HTC | 5000 | ND | ND | ND | 30 | 49 | 5000 | 52 | 89 | ND | 2.3 | ND | ND | ND | 39 | 49 | 550 | <0.38 | 52 | ND |
| Ca(OH)₂ | 8000 | ND | ND | ND | ND | 49 | <0.9 | 52 | 8.9 | ND | 23 | ND | ND | ND | ND | 50 | <0.9 | < 0.8 | 53 | ND |
| CaO | 1200 0 | ND | ND | ND | ND | 49 | <0.9 | 5,2 | 39 | ND | < | ND | ND | ND | ND | 35 | <0.9 | < D 5 | ND | ND |
| Chelex 100 at 2 wt% | ND | ND | ND | ND | ND | 49 | <09 | 52 | 89 | ND | ND | ND | ND | ND | ND | ND | <0.9 | 52 | ND | ND |
| Spiked 30% KOH | <0.1 | <0.1 | ND | ND | 90 | 49 | < 3 | 6 | 6 | ND | <0 1 | <0 1 | ND | ND | 90 | 49 | <3 | 6 | 6 | ND |
| MgSO₄ | <0.1 | 100 | ND | ND | 400 | 49 | ND | 6 | 6 | ND | <0.1 | <0 1 | ND | ND | 400 | 53 | ND | <0.1 | 5.6 | ND |
| Mg(NO₃)₂ | <0.1 | 70 | ND | ND | 90 | 49 | ND | 6 | 6 | ND | <0.1 | <0.1 | ND | ND | <3 | 52 | ND | <0.1 | 56 | ND |
| Mg(OH)₂ (commercial) | <0.1 | 100 | ND | ND | 90 | 49 | ND | 6 | 6 | ND | <0.1 | <0.1 | ND | ND | 90 | ND | ND | 6 | 6 | ND |
| Ca(NO₃)₂ | 490 | <0.1 | ND | ND | 90 | 49 | ND | 6 | 6 | ND | 2.4 | <0.1 | ND | ND | <3 | 53 | ND | 0.43 | 57 | ND |
| Spiked 30% KOH | <0.3 | <0.1 | ND | ND | 15 | 60 | ND | 75 | 1.6 | ND | <0.3 | <0 1 | ND | ND | 15 | 60 | ND | 75 | 16 | ND |
| MgSO₄ | <0.1 | 7 | ND | ND | 36 | 60 | ND | 75 | 1.6 | ND | <0.3 | <0 1 | ND | ND | 36 | 56 | ND | 6 | 1.5 | ND |
| Mg(NO₃)₂ | <0.1 | 45 | ND | ND | 15 | 60 | ND | 75 | 16 | ND | <0.3 | <0 1 | ND | ND | 14 | 56 | ND | 59 | 1.5 | ND |
| Spiked 30% KOH | <0 3 | <0.1 | ND | ND | ND | 60 | ND | 75 | ND | 50 | <0.3 | <0 1 | ND | ND | ND | 60 | ND | 75 | ND | 50 |
| Mg(NO₃)₂ | ND | 70 | ND | ND | ND | ND | ND | 75 | ND | 50 | ND | <0 1 | ND | ND | ND | ND | ND | <0.1 | ND | ~ 15 |

Analytical data for spiked and treated 30 wt.% KOH samples showing iron and trace sulfate removal and organic content (as humic acid (or TOC)) reduction and described in Examples 4 through 7 and Comparative Example 2 are shown in Table 4.

### Comparative Example 3

In this example, Chelex 100 was tested for its ability to remove Fe (II) from 30 wt.% KOH solution. To a solution of 30 wt.% KOH which had been spiked with 5.2 ppm Fe²⁺ as iron (II) chloride tetrahydrate, was added Chelex chelating resin at 2 wt.% concentration relative to the mass of KOH solution. The solution was stirred for 4 h before syringe filtering through a 0.45 µm Nylon filter. Semiquantitative analysis for iron using MQuant showed no difference in iron level for the starting spiked solution. Fe(!!) remained at 5.2 ppm in the presence of Chelex 100.

### Example 4

Similar to previous examples a 30 wt.% KOH solution was spiked with 5.2 ppm dissolved iron species by adding FeCl₂ to the KOH solution. Iron level of spiked solution was determined by ICP. Excess calcium hydroxide was added as might be for removal of sulfate in Example 2, and the resulting slurry stirred for 4 hrs. At this time a portion of the slurry was filtered through 0.45 µm Nylon filter media. The solution was analyzed by ICP-OES as described above. The resulting clear solution show no detectable amounts of iron, less than 0.2 ppm detection limit.

As shown in Table 4, calcium oxide and calcium hydrotalcite were also effective in removing Fe²⁺ from 30 wt.% KOH solution when added at about 1 wt.% loading.

### Example 5

Similar to previous examples a 30 wt.% KOH solution was spiked with 6 ppm dissolved iron species by adding FeCl₂ to the KOH solution. Iron level of spiked solution was determined by ICP. A water-soluble magnesium salt, magnesium sulfate, was added at a level of 100 ppm Mg²⁺, and the resulting slurry stirred for 4 hrs. At this time a portion of the slurry was filtered through 0.45 µm Nylon filter media. The solution was analyzed colorimetrically as described above as described above. The resulting clear solution showed less than 0.1 ppm based on a colorimetric calibration and ICP-OES results.

### Example 6

Similar to previous examples a 30 wt.% KOH solution was spiked with 6 ppm dissolved iron species by adding FeCl₂ to the KOH solution. Iron level of spiked solution was determined by ICP. A water-soluble magnesium salt, magnesium nitrate, was added at a level of 70 ppm Mg²⁺, and the resulting slurry stirred for 4 hrs. At this time a portion of the slurry was filtered through 0.45 µm Nylon filter media. The solution was analyzed colorimetrically as described above as described above. The resulting clear solution showed less than 0.1 ppm based on a colorimetric calibration. After drying a sample of the filtered precipitate, XRD analysis showed significant line broadening of the main Mg(OH)₂ peaks compared with those of a commercial sample (see Comparative Example 4) suggesting a much smaller crystallite size for the magnesium hydroxide freshly precipitated from magnesium sulfate. While SEM images show no individual crystallites for the filtered precipitate, 100-200 nm fine structure is observed, compared with the 0.75-2 µm crystals of the commercial Mg(OH)₂. Much smaller crystallite size in the freshly precipitated Mg(OH)₂ is indicative of relatively high surface area vs the commercial material.

### Example 7

A 30 wt.% solution of KOH was spiked with humic acid at a loading of 50 ppm (weight basis). After filtration, the resulting solution was yellow in color. After treatment with 70 ppm Mg²⁺ as Mg(NO₃)² followed by filtration the solution was significantly lighter and almost colorless. By comparison with the color of more dilute humic acid solutions, the resulting humic acid concentration after Mg(NO₃)² treatment was about 10 to 15 ppm.

### Comparative Example 4

Similar to previous examples a 30 wt.% KOH solution was spiked with 6 ppm dissolved iron species by adding FeCl₂ to the KOH solution. Iron level of spiked solution was determined by ICP. A water-insoluble magnesium salt, commercial magnesium hydroxide from Aldrich, was added at a level of 100 ppm Mg²⁺, and the resulting slurry stirred for 4 hrs. At this time a portion of the slurry was filtered through 0.45 µm Nylon filter media. The solution was analyzed colorimetrically as described above as described above. The resulting clear solution showed no change in iron level over the untreated solution. Powder XRD of the commercial Mg(OH)₂ showed sharp peaks indicative of a crystalline material with relatively large, well developed crystal. SEM images showed platelike crystals of Mg(OH)₂ were 0.75 to 2 µm in diameter and that these were typically formed into 10-50 µm agglomerates. These analyses indicate relatively low surface area for the commercial Mg(OH)₂

Analytical data for spiked and treated 30 wt.% KOH samples showing both Fe (II) and Fe (III) removal and ratio of Mg(NO₃)₂ to Fe (II)/(III) impurity effective for removing the iron are shown in Table 5 and described in Example 8.

**TABLE 5**

| Additive | Amount added (ppm w/w of final mixture) | Mg²⁺ added (ppm) | Starting Fe(II, III) concentration (ppm) | Detected final Fe(II, III) concentration (ppb) |
|---|---|---|---|---|
| Mg(NO₃)₂ | 300 | 50 | 5 | 197 |
| Mg(NO₃)₂ | 60 | 10 | 1 | 210 |
| Mg(NO₃)₂ | 30 | 5 | 0.5 | 249 |
| MgSO₄ | 250 | 50 | 5 | 171 |
| MgSO₄ | 50 | 10 | 1 | 105 |
| MgSO₄ | 25 | 5 | 0.5 | 131 |

### Example 8

Similar to previous examples, 30 wt.% KOH solutions were spiked with dissolved iron species by adding Fe(II)Cl₂ and Fe(III)(NO₃)₃ to the KOH solutions. Target iron levels are shown in Table 5. A water-soluble magnesium salt, magnesium nitrate, was added at different levels depending on the starting concentration of Fe (II)/(III). Concentrations of Fe (II)/(III) after precipitation are shown in the last column of Table 5 and were determined using UV-Vis spectroscopy. The results show not only that water soluble magnesium salts are able to remove both Fe (II) and Fe (III) impurities from KOH, but that the water-soluble magnesium salt is effective at a Mg²⁺ concentrations of only 10 times greater than that of the iron impurity. This is about 200 times lower than the concentration of Ca(OH)₂ required to remove the same level of iron impurity.

## Claims

1. A process for purifying a concentrated aqueous hydroxide solution comprising at least one target impurity selected from the group consisting of dissolved transition metals, inorganic anions, and dissolved organic compounds, said process comprising:
adding to the hydroxide solution at least one precipitation additive selected from the group consisting of water-soluble salts of alkaline earth metals; nickel (II) hydroxide; and hydroxides or oxides of alkaline earth metals, provided that the surface area of the hydroxides or oxides is more than 5 m²/g;
contacting the hydroxide solution with the precipitation additive(s) for sufficient time to enable formation of at least one insoluble compound (or complex) comprising the at least one target impurity or a derivative thereof as a precipitate; and
removing the precipitate from the hydroxide solution.

2. A process according to Claim 1, wherein the dissolved transition metals are dissolved iron, e.g., dissolved iron (II) and/or dissolved iron (III).

3. A process according to Claim 1 or Claim 2, wherein the inorganic anions are carbonate anions and sulfate anions.

4. A process according to any of Claims 1 to 3, wherein the alkaline earth metals are calcium, magnesium and barium.

5. A process according to any of Claims 1 to 4, wherein the, or where there is more than one, at least one or each of the precipitation additives is selected from the group consisting of calcium (II) oxide, calcium (II) hydroxide, calcium (II) carbonate, calcium (II) sulfate, calcium (II) nitrate, magnesium (II) oxide, magnesium (II) hydroxide, magnesium (II) carbonate, magnesium (II) sulfate, magnesium (II) nitrate, nickel (II) hydroxide and barium (II) hydroxide.

6. A process according to any of Claims 1 to 5, wherein the hydroxide or oxides of alkaline earth metals have a surface area of more than 10 m²/g, e.g., more than 50 m²/g or more than 100 m²/g, but preferably less than 200 m²/g.

7. A process according to any of Claims 1 to 6, wherein the process takes place at a temperature in a range from 10°C to 90°C, or from 15°C to 50°C, or from 15 °C to 30°C.

8. A process according to any of Claims 1 to 7, wherein the hydroxide solution is contacted with the precipitation additive(s) for a period of time in a range from 0.1 h to 10 h, e.g., from 0.2 h to 6 h.

9. A process according to any of Claims 1 to 8, wherein dissolved iron is present as an impurity in the concentrated aqueous hydroxide solution and the precipitation additive is nickel (II) hydroxide.

10. A process according to any of Claims 1 to 8, wherein dissolved iron is present as an impurity in the concentrated aqueous hydroxide solution and the precipitation additive is selected from the group consisting of calcium (II) hydroxide, calcium (II) oxide and magnesium (II) sulfate.

11. A process according to Claim 10, wherein the magnesium (II) sulfate is added in an amount in a range from 20-fold excess to 50-fold excess, based on the total stoichiometric amount of the dissolved iron.

12. A process according to any of Claims 1 to 8, wherein sulfate anions and dissolved iron are present as impurities in the concentrated aqueous hydroxide solution and the precipitation additive is selected from magnesium (II) nitrate and calcium (II) nitrate.

13. A process according to any of Claims 1 to 8, wherein dissolved iron and at least one organic compound are present as target impurities in the concentrated aqueous hydroxide solution and the precipitation additive is selected from the group consisting of magnesium (II) nitrate and calcium (II) nitrate.

14. A process according to Claims 1 to 8, wherein dissolved iron is present as a target impurity in the concentrated aqueous hydroxide solution and the precipitation additive is selected from the group consisting of magnesium (II) nitrate and calcium (II) nitrate.

15. A process according to any of Claims 1 to 14, wherein the concentrated aqueous hydroxide solution is concentrated aqueous potassium hydroxide solution.

16. A concentrated aqueous hydroxide solution purified according to the process of any of Claims 1 to 15 for use as an electrolyte in alkaline water electrolysis (AWE).

17. Use of a concentrated hydroxide solution purified according to the process of any of Claims 1 to 15 as an electrolyte in alkaline water electrolysis (AWE).
